# EUROPÄISCHE PATENTSCHRIFT

(11) **EP 3 275 609 B1**
(45) Veröffentlichungstag und Bekanntmachung des Hinweises auf die Patenterteilung: **03.04.2024**
(21) Anmeldenummer: 17001266.0
(22) Anmeldetag: 25.07.2017
(51) Int. Cl.: B27C 1/12, B27M 1/08

(54) **ANLAGE UND VERFAHREN ZUM BEARBEITEN VON WERKSTÜCKEN AUS HOLZ, KUNSTSTOFF UND DERGLEICHEN**
SYSTEM AND METHOD FOR MACHINING WORKPIECES MADE OF WOOD, PLASTIC AND SIMILAR
INSTALLATION ET PROCÉDÉ D'USINAGE DE PIÈCES EN BOIS, EN MATIÈRE SYNTHÉTIQUE ET ANALOGUES

(30) Priorität: 29.07.2016 DE 102016009430
(43) Veröffentlichungstag der Anmeldung: 31.01.2018
(73) Patentinhaber: Michael Weinig Ag, 97941 Tauberbischofsheim (DE)
(72) Erfinder: HONIKEL, Udo, 97922 Lauda-Königshofen (DE)
(74) Vertreter: Kohl, Karl-Heinz

(56) Entgegenhaltungen:
- EP-A1- 2 708 312
- EP-A2- 1 055 485
- WO-A2-2008/004263
- DE-A1-102010 037 547
- JP-A- S55 157 417
- US-A1- 2009 308 217

## Beschreibung

Die Erfindung betrifft eine Anlage zum Bearbeiten von Werkstücken aus Holz, Kunststoff und dergleichen sowie ein Verfahren zum Bearbeiten von Werkstücken aus Holz, Kunststoff und dergleichen .

Bekannte Anlagen dienen zur Bearbeitung von Werkstücken, aus denen Fenster- und Türrahmen bzw. Fensterflügel hergestellt werden. Die Werkstücke werden derart in eine Vorschubeinheit eingespannt, dass die Längsseite des Werkstückes mit dem entsprechenden Werkzeug bearbeitet werden kann. Ist die eine Längsseite bearbeitet, wird das Werkstück an eine zweite Vorschubeinheit so übergeben, dass die gegenüberliegende Längsseite der Werkstücke ebenfalls bearbeitet werden kann.

Die Endenbearbeitung der Werkstücke erfolgt mit einer Bearbeitungseinheit, die in Y-Richtung verfährt, während die Vorschubeinheit stillsteht. Die Relativbewegung zwischen dem Werkzeug und der Vorschubeinheit erfolgt somit senkrecht zur X-Richtung, die für die Längsbearbeitung der Werkstücke maßgeblich ist. Mit einer solchen Anlage und einem solchen Verfahren lässt sich eine hohe Leistung erzielen.

Die WO 2008/004263 A2 zeigt eine Anlage zum Bearbeiten von Werkstücken aus Holz, Kunststoff und dergleichen, mit wenigstens einer Bearbeitungseinheit zur Endenbearbeitung und Längsbearbeitung der Werkstücke, und mit wenigstens zwei Vorschubeinheiten, die, in X-Richtung gesehen, nebeneinander liegen und jeweils wenigstens zwei Tische mit Spannelementen zum Einspannen der Werkstücke aufweisen, wobei die Tische jeder Vorschubeinheit längs Führungen relativ zueinander verstellbar sind.

Es ist weiter eine Maschine bekannt (EP 1 055 485 A2), mit der symmetrische Teile gleichzeitig bearbeitet werden können. Es werden zwei einander gegenüberliegende Werkstücke auf zwei Tischen gespannt und in X-Richtung verfahren. Eine Verstellung der Tische derart, dass die Werkstücke aneinanderliegen, ist nicht vorgesehen.

Die EP 2 708 312 A1 zeigt ein Bearbeitungszentrum für die Metallbearbeitung, bei dem die Werkstücke auf Paletten aufgespannt werden, die wahlweise in die Bearbeitungsposition gebracht werden.

Bei einer bekannten Werkzeugmaschine (DE 10 2010 037 547 A1) wird ein Spannsystem eingesetzt, mit dem das Werkstück an der Werkzeugmaschine eingespannt wird. Das Spannsystem hat Klemmeinrichtungen, mit denen Einspannmittel in die zum Einspannen erforderliche Position gebracht werden. Während der Werkstückbearbeitung stehen die Klemmeinrichtungen still.

Der Erfindung liegt die Aufgabe zugrunde, die gattungsgemäße Anlage und das gattungsgemäße Verfahren so auszubilden, dass eine noch höhere Leistung erreicht werden kann.

Diese Aufgabe wird mit einer Anlage gemäß Anspruch 1 und einem Verfahren gemäß Anspruch 10 gelöst.

Bei der erfindungsgemäßen Anlage weisen die beiden Vorschubeinheiten jeweils wenigstens zwei Tische auf. Die Tische jeder Vorschubeinheit sind in X-Richtung relativ zueinander verstellbar. Dadurch lassen sich unterschiedlich lange Werkstücke in den beiden Vorschubeinheiten optimal einspannen.

Die Tische der beiden Vorschubeinheiten sind jeweils mit mindestens einem Spannelement versehen. Mit den Tischen der beiden Vorschubeinheiten können zwei oder mehr Werkstücke so eingespannt werden, dass diese sich in X-Richtung erstrecken. Die Tische der beiden Vorschubeinheiten werden mit den eingespannten Werkstücken in X- und in Y-Richtung zueinander so weit gefahren, dass die Werkstücke mit ihren einander zugewandten Längsseiten aneinander liegen. Die Werkstücke in den beiden Vorschubeinheiten werden hierbei so zueinander ausgerichtet, dass ihre Enden etwa bündig bzw. auf einer Höhe liegen. Dadurch ist es möglich, die beiden auf gleicher Höhe liegenden Enden der Werkstücke jeweils in einem Arbeitsgang zu bearbeiten. Anschließend können die Tische der Vorschubeinheiten in Y-Richtung auseinander gefahren werden, so dass die an ihren Enden bearbeiteten Werkstücke einen solchen Abstand voneinander haben, dass zwischen die Werkstücke mindestens ein Längsbearbeitungswerkzeug eingeführt werden kann. Mit ihm können die einander zugewandten Längsseiten der Werkstücke bearbeitet werden.

Nach der Endenbearbeitung der Werkstücke ist somit ein Umspannen für die Längsbearbeitung der einen Längsseite der Werkstücke nicht erforderlich. Die Tische der Vorschubeinheiten müssen lediglich in Y-Richtung auseinander gefahren werden. Dadurch lassen sich die Werkstücke in kurzer Zeit nacheinander bearbeiten. Die erfindungsgemäße Anlage hat darum eine hohe Arbeitsleistung.

Vorteilhaft ist es, wenn die Tische der beiden Vorschubeinheiten unabhängig voneinander in X- und/oder Y-Richtung verstellbar sind. Dann können die Tische und ihre Spannelemente an der optimalen Position relativ zum einzuspannenden und zu bearbeitenden Werkstück positioniert werden.

Die Tische der beiden Vorschubeinheiten sind auf Schlitten angeordnet, die in X-Richtung längs Führungen verfahrbar sind. Die Tische können somit über die Schlitten in X-Richtung verfahren werden. Die Schlitten haben ihrerseits in Y-Richtung verlaufende Führungen, mittels derer die Tische quer zur X-Richtung in Y-Richtung verfahren werden können.

Bei einer bevorzugten Ausführungsform weist die Anlage wenigstens eine weitere Vorschubeinheit auf, die in X-Richtung verstellbar ist. Mit dieser weiteren Vorschubeinheit können von den beiden anderen Vorschubeinheiten die teilbearbeiteten Werkstücke übernommen werden.

Hierbei ist es vorteilhaft, wenn die weitere Vorschubeinheit längs einer weiteren Führung verfahrbar ist, die sich, in X-Richtung gesehen, zwischen den Führungen der beiden anderen Vorschubeinheiten befindet. Die Tische der beiden anderen Vorschubeinheiten werden in Y-Richtung so weit auseinander gefahren, dass die weitere Vorschubeinheit zwischen die auseinander gefahrenen Tische der beiden anderen Vorschubeinheiten fahren kann. Dann können mit der weiteren Vorschubeinheit die teilbearbeiteten Werkstücke einfach an die weitere Vorschubeinheit übergeben werden.

Bei einer vorteilhaften Ausführungsform ist die weitere Vorschubeinheit mit einer Spanneinrichtung versehen, mit der die Werkstücke eingespannt werden können.

Die Spanneinrichtung der weiteren Vorschubeinheit weist vorteilhaft Spannzangen auf, die in zwei Reihen angeordnet sind, die in X-Richtung verlaufen und einander gegenüberliegen. Mit den beiden Reihen von Spannzangen können zwei oder mehr Werkstücke in der weiteren Vorschubeinheit eingespannt werden.

Bevorzugt ist die weitere Vorschubeinheit zwischen die in Y-Richtung auseinander gefahrenen Tische der beiden anderen Vorschubeinheiten verfahrbar. Sobald die Endenbearbeitung und die Bearbeitung der einen Längsseite der Werkstücke, die auf den beiden anderen Vorschubeinheiten auf den Tischen eingespannt sind, beendet ist, kann die weitere Vorschubeinheit zwischen die auseinander gefahrenen Tische gefahren werden.

Hierbei ist vorteilhaft, dass die Führung für die weitere Vorschubeinheit zwischen den Führungen für die beiden anderen Vorschubeinheiten liegt. Dadurch können die Vorschubeinheiten so in die Übergabeposition verfahren werden, dass die Werkstücke zuverlässig von den den beiden anderen Vorschubeinheiten an die weitere Vorschubeinheit übergeben werden können.

Bei einer vorteilhaften Ausbildung sind die Bearbeitungseinheiten an wenigstens einem Portal vorgesehen, das sich mit Abstand über die Führungen für die Vorschubeinheiten erstreckt.

Damit die fertig bearbeiteten Werkstücke für eine weitere Behandlung der Anlage entnommen werden können, ist sie in vorteilhafter Weise an einem Abgabebereich mit wenigstens einem Ablagetisch versehen, auf dem die fertig bearbeiteten Werkstücke abgelegt werden können.

Der Abgabetisch ist vorteilhaft neben dem Verfahrweg der weiteren Vorschubeinheit angeordnet, in X-Richtung gesehen. Dadurch kann die weitere Vorschubeinheit neben den Abgabetisch verfahren werden, so dass die Werkstücke einfach an den Abgabetisch abgegeben werden können.

Beim erfindungsgemäßen Verfahren werden wenigstens zwei Werkstücke, auf Tischen von wenigstens zwei Vorschubeinheiten gespannt. Die Tische jeder Vorschubeinheit sind in X-Richtung relativ zueinander verstellbar. Die Tische werden anschließend in Y-Richtung so zusammengefahren, dass die Werkstücke mit ihren einander zugewandten Längsseiten aneinander liegen. Dann werden die Werkstücke mit ihren Längsseiten aneinanderliegend zunächst an ihrem einen Ende und anschließend am anderen Ende jeweils in einem Arbeitsgang bearbeitet. Die Werkstücke werden hierbei so zueinander angeordnet, dass ihre Stirnseiten bzw. Enden zumindest etwa auf gleicher Höhe liegen. Die Endenbearbeitung kann darum sehr einfach und vor allen Dingen zeitsparend durchgeführt werden.

Vorteilhaft werden die Werkstücke nach der Endenbearbeitung quer zu ihren aneinanderliegenden Längsseiten in Y-Richtung so weit auseinander gefahren, dass diese Längsseiten längsbearbeitet werden können.

Ist an beiden Längsseiten der einander gegenüberliegenden Werkstücke die gleiche Bearbeitung erforderlich, dann können gemäß einer erfindungsgemäßen Verfahrensweise mit mindestens einem Längsbearbeitungswerkzeug in einem Arbeitsgang gleichzeitig beide Längsseiten der Werkstücke bearbeitet werden. Hierbei bewegen sich die Werkstücke auf einander gegenüberliegenden Seiten des Werkzeuges in X-Richtung. Das Längsbearbeitungswerkzeug wird hierbei in vorteilhafter Weise so drehbar angetrieben, dass die Längsseiten der einander gegenüberliegenden Werkstücke im Gegenlauf bearbeitet werden. Grundsätzlich ist aber auch eine Gleichlaufbearbeitung möglich.

Ist an den Längsseiten der einander gegenüberliegenden Werkstücke eine ungleiche Bearbeitung vorzunehmen, dann werden die Längsseiten dieser Werkstücke nacheinander mit mindestens einem entsprechenden Längsbearbeitungswerkzeug bearbeitet.

Es ist bei dieser Verfahrensvariante auch möglich, dass die Längsseiten der beiden Werkstücke gleichzeitig mit unterschiedlichen Längsbearbeitungswerkzeugen bearbeitet werden.

Sind die einander zugewandten Längsseiten der einander gegenüberliegenden Werkstücke bearbeitet, werden die Werkstücke an eine weitere Vorschubeinheit übergeben. Hier werden die Werkstücke so eingespannt, dass ihre anderen Längsseiten frei liegen, so dass diese anderen Längsseiten nunmehr durch ein entsprechendes Längsbearbeitungswerkzeug bearbeitet werden können.

Damit die Werkstücke bei der Übergabe von den beiden anderen Vorschubeinheiten an die weitere Vorschubeinheit ihre Position nicht verändern, sind die Werkstücke während des Übergabevorganges ständig eingespannt.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsformen näher erläutert. Es zeigen
- Fig. 1: in schematischer Darstellung eine Draufsicht auf eine erfindungsgemäße Anlage,
- Fig. 2: in schematischer Darstellung und in Ansicht in X-Richtung zwei Vorschubeinheiten mit mit Abstand nebeneinander liegenden Tischen, auf denen jeweils ein zu bearbeitendes längliches Werkstück eingespannt ist,
- Fig. 3: die Tische der Vorschubeinheiten in zusammengefahrenem Zustand, in dem die eingespannten Werkstücke mit ihren einander zugewandten Längsseiten aneinander liegen,
- Fig. 4 und 5: in Draufsicht die Vorschubeinheiten mit den aneinander liegenden Werkstücken sowie zwei unterschiedliche Positionen eines Endenbearbeitu ngswerkzeuges,
- Fig. 6: in schematischer Darstellung und in Draufsicht die gleichzeitige Bearbeitung der einander zugewandten Längsseiten der beiden Werkstücke durch ein Längsbearbeitungswerkzeug,
- Fig. 7: die getrennte Bearbeitung der Längsseiten der einander gegenüberliegenden Werkstücke durch zwei Längsbearbeitungswerkzeuge,
- Fig. 8: in Draufsicht eine weitere Vorschubeinheit, die zwischen die auseinander gefahrenen Tische der anderen Vorschubeinheiten eingefahren ist,
- Fig. 9: eine Vorderansicht der Vorschubeinheiten in der Stellung gemäß Fig. 8,
- Fig. 10: eine Draufsicht auf die erfindungsgemäße Anlage mit Werkstücken, die in der weiteren Vorschubeinheit für eine Längsbearbeitung eingespannt sind,
- Fig. 11: eine Draufsicht auf eine zweite Ausführungsform einer erfindungsgemäßen Anlage,
- Fig. 12 und 13: in schematischer Darstellung die Einspannung und Endenbearbeitung zweier aneinander liegender Kurzteile,
- Fig. 14 und 15: in schematischer Darstellung die Einspannung und Endenbearbeitung eines einzigen Kurzteiles,
- Fig. 16: eine Draufsicht auf einen Werkzeugspeicher der erfindungsgemäßen Anlage.

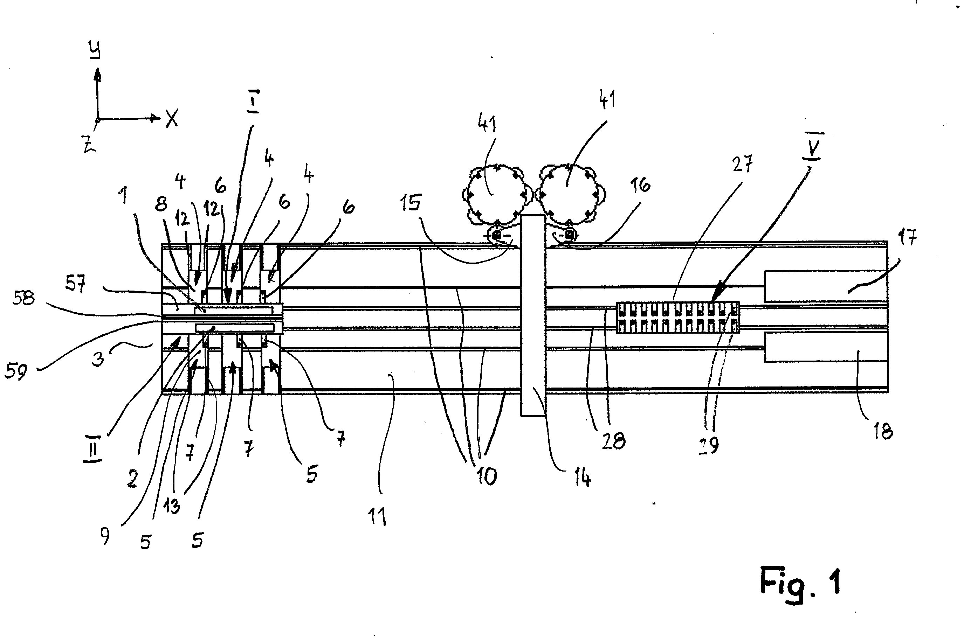

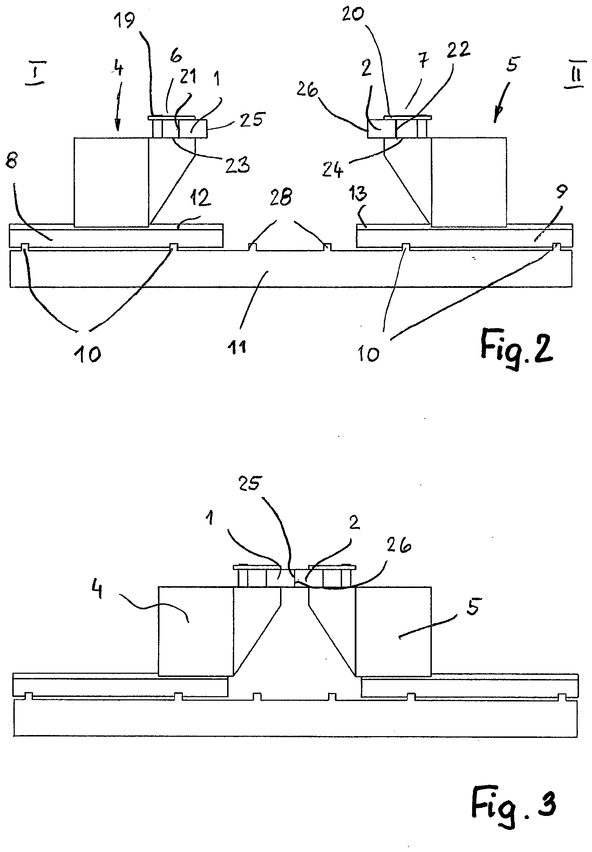

Fig. 1 zeigt in schematischer Darstellung und in Draufsicht eine Anlage zur Längs- und Querbearbeitung von länglichen Werkstücken 1, 2. Sie haben viereckigen Querschnitt und werden an ihren Längsseiten sowie an ihren Enden in noch zu beschreibender Weise bearbeitet. Die Werkstücke 1, 2 werden an einem Aufgabebereich 3 der Anlage zugeführt und auf Tischen 4, 5 eingespannt, die Teil zweier Vorschubeinheiten I, II sind und mit jeweils wenigstens einer Spanneinrichtung 6, 7 versehen sind (Fig. 2). Die Tische 4, 5 sitzen jeweils auf einem Schlitten 8, 9, der in X-Richtung mittels Führungen 10 (Fig. 2) verschiebbar ist. Die Führungen 10 sind schematisch als in X-Richtung verlaufende Leisten dargestellt, die an der Oberseite eines Bettes 11 vorgesehen sind. In der Praxis können die Führungen 10 bekannte Linearführungen mit Laufschienen und Kugel- oder Rollenführungswagen sein.

Auf den Schlitten 8, 9 ist der jeweilige Tisch 4, 5 senkrecht zur X-Richtung in Y-Richtung verschiebbar. Hierzu ist jeder Schlitten 8, 9 mit jeweils zwei parallel zueinander in Y-Richtung verlaufenden Führungen 12, 13 versehen.

Die Führungen 10 erstrecken sich über die gesamte Länge des Bettes 11, so dass die zu bearbeitenden Werkstücke 1, 2 innerhalb der Anlage in jede gewünschte Position verfahren werden können. Im dargestellten Ausführungsbeispiel sind drei Tische 4 und drei Tische 5 vorgesehen, die mittels (nicht dargestellter) Antriebe unabhängig voneinander in Y-Richtung verfahren werden können. Außerdem können die jedem Tisch 4, 5 zugeordneten Schlitten 8, 9 unabhängig voneinander mittels (nicht dargestellter) Antriebe auf den Führungen 10 in X-Richtung verfahren werden. Bei einer einfacheren Ausführung können die Tische 4, 5 gemeinsam in Y-Richtung verfahren werden. Ebenso können die Schlitten 8, 9 jeweils gekoppelt und jeweils über einen gemeinsamen Antrieb in X-Richtung verfahren werden. Vorteilhaft sind dabei die Schlitten 8 und 9 über weitere Antriebe in einem begrenzten Bereich in X-Richtung zueinander einstell- bzw. verfahrbar.

Bei einer anderen Ausführung ist auch eine Kopplung der Schlitten 8 und 9 möglich. Dann werden alle Schlitten 8, 9 über einen gemeinsamen Antrieb verstellt.

Neben dem Bett 11 ist ein Portal 14 auf dem Boden abgestützt, das mit zwei Werkzeugeinheiten 15, 16 versehen ist, die beiderseits des Portals 14 angeordnet und unabhängig voneinander in Y- und Z-Richtung verstellbar sind. Abweichend vom dargestellten Ausführungsbeispiel können am ortsfesten Portal 14 weitere Bearbeitungseinheiten vorgesehen sein.

An dem dem Aufgabebereich 3 gegenüberliegenden Ende der Anlage befinden sich zwei Abgabetische 17, 18, auf die die fertig bearbeiteten Werkstücke 1, 2 abgelegt werden.

Die Werkstücke 1, 2 können von oben auf einen Aufgabetisch 57 oder direkt auf die Tische 4, 5 aufgelegt und dann mit den Spanneinrichtungen 6, 7 gespannt werden. Es ist aber auch möglich, die Werkstücke 1, 2 in X-Richtung dem Aufgabetisch 57 bzw. den Tischen 4, 5 zuzuführen. Jeder Tisch 4, 5 weist als Spanneinrichtung 6, 7 jeweils eine Spannzange 19, 20 auf (Fig. 2). Sie ist so am Tisch 4, 5 angeordnet, dass sie das Werkstück 1, 2 von einer Längsseite aus teilweise übergreift (Fig. 2). Wie aus Fig. 2 hervorgeht, sind die Spannzangen 19, 20 der einander gegenüberliegenden Tische 4, 5 so angeordnet, dass sie die Werkstücke 1, 2 von den einander abgewandten Längsseiten 21, 22 aus übergreifen. In eingespannter Lage liegen die Werkstücke 1, 2 auf einer Auflagefläche 23, 24 der Tische 4, 5 flächig auf. Damit an der anderen Längsseite 25, 26 eine Bearbeitung der Werkstücke 1, 2 möglich ist, werden die Werkstücke 1, 2 so eingespannt, dass sie über den jeweiligen Tisch 4, 5 und die Spannzange 19, 20 überstehen.

Auf dem Bett 11 ist eine weitere Vorschubeinheit V mit einem Tisch 27 vorgesehen, der in X-Richtung mittels Führungen 28 verfahrbar ist. Die Führungen 28 liegen zwischen den Führungen 10 der Tische 4, 5. Der Tisch 27 ist mit einzelnen Spannzangen 29 versehen, die jeweils in einer Reihe nebeneinander angeordnet sind. Die Spannzangenreihen liegen in Y-Richtung mit Abstand nebeneinander.

Im dargestellten Ausführungsbeispiel haben beide Vorschubeinheiten I, II jeweils drei einander gegenüberliegende Tische 4 und 5, die unabhängig voneinander sowohl in X- als auch in Y-Richtung verfahrbar sind. Insbesondere die unabhängige Verfahrbarkeit in X-Richtung ermöglicht es, unterschiedlich lange Werkstücke 1, 2 zuverlässig einzuspannen. Je nach Länge der Werkstücke 1, 2 werden jeweils alle Tische 4, 5 zum Einspannen eingesetzt. Bei kurzen Werkstücken 1, 2 reicht gegebenenfalls nur ein Tisch 4, 5 aus, um das Werkstück bei der Bearbeitung durch entsprechende Werkzeuge fest einzuspannen.

Wenn im Folgenden die Einspannung der Werkstücke 1, 2 mit jeweils drei Tischen 4, 5 und ihren Spanneinrichtungen 6, 7 beschrieben wird, ist dies nicht als Beschränkung auf eine solche Ausbildung zu verstehen. Es sind auch weniger oder mehr Tische 4, 5 mit Spanneinrichtungen 6, 7 möglich. Bei vier Tischen 4, 5 beispielsweise können an jeder Seite zwei Werkstücke 1, 2 gespannt werden.

Damit die Werkstücke 1, 2 an ihren Enden bearbeitet werden können, werden sie so mittels der Spanneinrichtungen 6, 7 der Tische 4, 5 eingespannt, dass sie in X-Richtung über die Tische 4, 5 überstehen (Fig. 1). Dann lassen sich die Enden der Werkstücke 1, 2 durch ein entsprechendes Querbearbeitungswerkzeug zuverlässig bearbeiten.

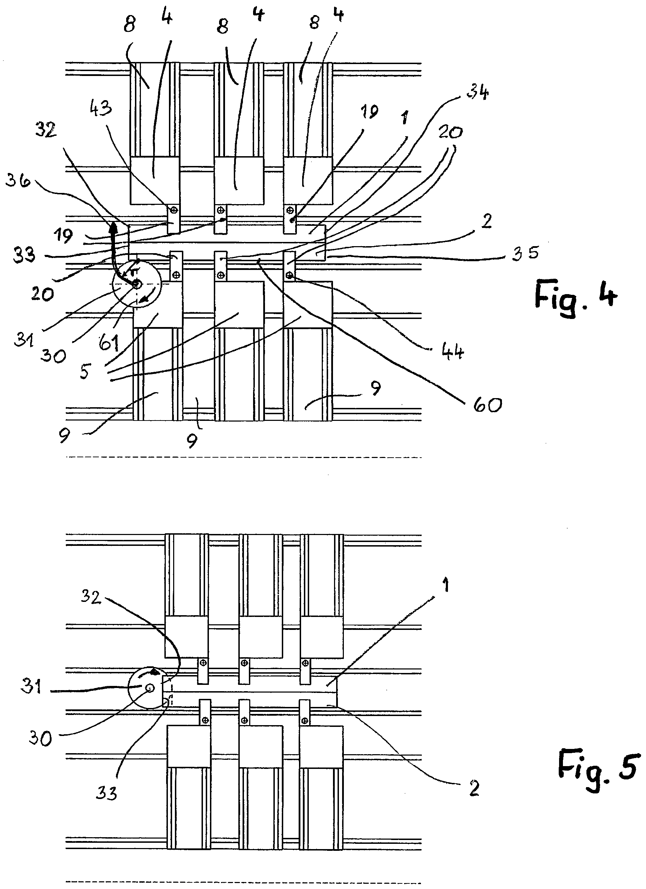

Für die Endenbearbeitung beider Werkstücke 1, 2 werden die Tische 4, 5 in Y-Richtung so weit zueinander verfahren, bis die Werkstücke 1, 2 mit ihren einander zugewandten Längsseiten 25, 26 aneinanderliegen (Fig. 3). In diesem Falle können mit einem Querbearbeitungswerkzeug 31 (Fig. 4 und 5) die Enden beider Werkstücke 1, 2 gleichzeitig bearbeitet werden.

Die zu bearbeitenden Werkstücke 1, 2 können beispielsweise über einen Greifer, der beispielsweise Teil eines Beladeportals sein kann, auf den Aufgabetisch 57 aufgelegt werden. Bei der Zuführung der Werkstücke 1, 2 in X-Richtung können vorteilhaft Transport- bzw. Förderbänder eingesetzt werden, die die Werkstücke auf den Aufgabetisch 57 fördern. Die Tische 4, 5 werden über eine Steuerung automatisch in die erforderliche X-Position bezüglich der zu bearbeitenden Werkstücke 1, 2 verstellt, so dass die Werkstücke 1, 2 mit ihren Enden über die Tische 4, 5 überstehen. Die Daten der zu bearbeitenden Werkstücke 1, 2 werden vor der Bearbeitung ermittelt und der Steuerung mitgeteilt, die entsprechend dieser Teiledaten die Tische 4, 5 einstellt. Die Spannzangen 19, 20 befinden sich zur Aufgabe der Werkstücke 1, 2 auf die Tische 4, 5 in einer oberen Freigabestellung. Bei der dargestellten Ausführungsform werden die Werkstücke mittels jeweils eines Lineals 58, 59 vom Aufgabetisch 57 auf die Tische 4, 5 geschoben. Durch die Stellung der Tische 4, 5 in Y-Richtung und den Verfahrweg des Lineals 58, 59 ist die Spannposition der Werkstücke 1, 2 exakt festgelegt. Diese wird in Abhängigkeit des Rohholzquerschnittes und des späteren Längsprofiles so festgelegt, dass die Werkstücke zur Bearbeitung dieses Längsprofiles in Y-Richtung über die Spannzangen 19, 20 und die Tische 4, 5 vorstehen. Sobald die Werkstücke 1, 2 zugeführt sind, werden die Spannzangen 19, 20 in ihre Spannstellung nach unten verstellt und der Spannvorgang vorgenommen.

Im Gegensatz zu den positionierbaren Linealen 58, 59 können auch die Tische 4, 5 in Y-Richtung positionierbare Anschläge aufweisen, gegen welche die Werkstücke 1, 2 mittels der Lineale 58, 59 geschoben werden, die dann nicht positionierbar ausgebildet sein müssen, sondern nur vor und zurück fahren. Eine solche Ausbildung hat den Vorteil, dass die Werkstücke 1. 2 mit einer definierten Kraft gegen die Anschläge geschoben werden, wobei diese vor dem Spannvorgang geradegedrückt werden.

Alternativ fahren die Tische 4, 5 zur Aufnahme der Werkstücke 1, 2 in Y-Richtung längs der Führungen 12, 13. Auch hierbei werden die Tische 4, 5 und die Werkstücke 1, 2 so in Y-Richtung gegeneinander ausgerichtet, dass die Werkstücke 1. 2 in Y-Richtung über die Spannzangen 19, 20 und die Tische 4, 5 vorstehen (Fig. 2). Die Werkstücke liegen hierbei vorteilhaft an einem starren Anschlag an, worüber deren Position in Y-Richtung festgelegt ist. Vorteilhaft weisen die Tische 4, 5 einen gefederten Anschlag zum Geradedrücken der Werkstücke am Anschlag auf. Bei einer solchen Ausführung kann der Aufgabetisch 57 in bekannter Weise rechenförmig ausgebildet sein, damit die Tische 4, 5 mit ihren Auflageflächen 23, 24 zur Aufnahme der Werkstücke 1, 2 in die Lücken fahren können.

Bei einer anderen Ausbildung kann der Aufgabetisch 57 bei der Übergabe in Y-Richtung verschoben bzw. verstellt werden, während das Werkstück 1, 2 an dem starren Anschlag abgestützt bleibt.

Es ist auch möglich, die Werkstücke 1, 2 direkt vom Beladeportal zu übernehmen. Hierbei ist die genaue Ausrichtung und Spannung durch die Übergabe- bzw. Übernahmestellung des Beladeportals und den Tischen 4, 5 gegeben. Anstelle der Tische 4, 5 kann auch das Beladeportal in Y-Richtung in die Übergabestellung fahren.

Bei einer weiteren Ausführung können die Spannzangen 19, 20 beispielsweise um eine vertikale Achse (Z-Richtung) verschwenkbar sein. Dann können die Werkstücke 1, 2 mit dem Beladeportal von oben direkt auf die Tische 4, 5 aufgelegt werden. Sobald die Werkstücke 1, 2 aufgelegt sind, werden die Spannzangen 19, 20 in ihre Spannstellung zurückgeschwenkt und der Spannvorgang vorgenommen. Weitere konstruktive Ausführungen, die Spannzangen 19, 20 aus dem Zuführweg der Werkstücke 1, 2 zur Beladung von oben wegzustellen, sind denkbar.

Nach dem Auflegen und Einspannen der Werkstücke 1, 2 werden die Tische 4, 5 mittels ihrer Schlitten 8, 9 in X-Richtung längs der Führungen 10 vor eine Bearbeitungsspindel 30 der Werkzeugeinheit 15 gefahren. Dies kann, wie vorher beschrieben, gekoppelt geschehen, wobei die Kopplung der Schlitten 8,9 mechanisch oder steuerungstechnisch durch Kopplung der Antriebe erfolgen kann. Auf der Bearbeitungsspindel 30 sitzt das Endenbearbeitungswerkzeug 31, mit dem die Enden der Werkstücke 1, 2 bearbeitet werden. Die Werkzeugeinheit 15 mit der Bearbeitungsspindel 30 kann längs des Portals 14 in Y- sowie in Z-Richtung eingestellt werden.

Die Schlitten 4, 5, werden vorteilhaft während ihrer Fahrt in Richtung auf die Werkzeugeinheit 15 in Y-Richtung so verstellt, dass die Werkstücke 1, 2 mit ihren einander zugewandten Längsseiten 25, 26 aneinander liegen. Sobald die Bearbeitungsposition am Portal 14 erreicht ist, erfolgt mit dem Endenbearbeitungswerkzeug 31 (Fig. 4) die gleichzeitige Bearbeitung der Enden der aneinander liegenden Werkstücke 1, 2. Die Werkstücke 1, 2 sind hierbei so gegeneinander ausgerichtet, dass ihre Enden 32, 33; 34, 35 in etwa bündig liegen.

Die Tische 4, 5 können auch vor dem Verfahren in Richtung auf das Portal 14 oder bei Erreichen der Endenbearbeitungsposition vor dem Portal 14 erst zusammengefahren werden. Die Verstellung der Schlitten 4, 5 in Y-Richtung während der Fahrt zum Portal 14 bringt jedoch den Vorteil der Zeitersparnis.

Zunächst werden die Enden 32, 33 der Werkstücke 1, 2 bearbeitet. Anschließend wird durch entsprechendes Verfahren der Tische 4, 5 die Bearbeitung der anderen Enden 34, 35 vorgenommen.

Da die Werkstücke 1, 2 aneinander liegen, können die Enden 32, 33; 34, 35 jeweils in einem Arbeitsgang gleichzeitig ohne Werkzeugwechsel gefräst werden, vorausgesetzt die Endenprofile auf den beiden Seiten sind gleich. Bei unterschiedlichen Endenprofilen ist ein Werkzeugwechsel notwendig. Die Profile der nebeneinanderliegenden Enden 32, 33 bzw. 34, 35 müssen gleich sein.

Während der Endenbearbeitung dreht das Bearbeitungswerkzeug 31 um seine Achse. Bei der Darstellung gemäß Fig. 4 dreht das Endenbearbeitungswerkzeug 31 im Uhrzeigersinn. In Fig. 4 ist mit einem Pfeil 36 der relative Bewegungsweg zwischen dem Endenbearbeitungswerkzeug 31 und den Werkstücken 1,2 bei der Endenbearbeitung dargestellt. Dieser ergibt sich durch die Überlagerung der Bewegungen von Werkzeug 31 und Tischen 4, 5. In Fig. 4 befindet sich das Endenbearbeitungswerkzeug 31 in seiner Ausgangsstellung an der einen Längsseite 60 des Werkstückes 2. Das drehende Werkzeug 31 kann in die Längsseite 60 des Werkstückes 2 je nach späterer Längsprofilierung zunächst leicht eintauchen. Danach erfolgt in bekannter Weise durch die überlagerte Bewegung von Werkzeug 31 und Tischen 4, 5 eine Relativbewegung des Werkzeugmittelpunktes über einen Viertelkreis, dessen Radius r dem Flugkreisradius des Werkzeuges 31 und dessen Mittel- bzw. Drehpunkt dem Schnittpunkt einer vertikalen Linie 61 in Fig. 4 durch den Werkzeugmittelpunkt und der Längsseite 60 des Werkstückes 2 entspricht. Die Schneiden drehen sich bei dieser Bewegung 36 (Fig. 4) in die Stirnseite 33 des Werkstückes 2 ein. Man spricht von dem so genannten Eindrehen des Werkzeuges 31. Obwohl die Drehrichtung des Endenbearbeitungswerkzeuges 31 so gewählt ist, dass die Bearbeitung im Gegenlauf erfolgt, werden durch dieses sogenannte Eindrehen Ausrisse zuverlässig vermieden, da beim Schneidenaustritt praktisch keine Spanabnahme erfolgt. Der Schneidenaustritt erfolgt über die gesamte Eindrehbearbeitung an dem Eckpunkt, welcher mit dem Mittel- bzw. Drehpunkt des Viertelkreises zusammenfällt. Anschließend wird das Werkzeug 31 längs der Stirnseite 32, 33 der beiden Werkstücke 1, 2 bewegt und hierbei die Bearbeitung vorgenommen. Nach der beschriebenen Stirnbearbeitung auf der einen Werkstückseite erfolgt analog die Bearbeitung der Stirnseiten 34, 35. Die Relativbewegung erfolgt dabei in Bezug auf Fig. 4 von oben nach unten und das Eindrehen an der Stirnseite 34. Da die beiden Werkstücke 1, 2 aneinander liegen und die Stirnseiten 32, 33, 34, 35 als Doppelteile bearbeitet werden, können beide Werkstücke 1, 2 ausrissfrei gefräst werden, wobei das sogenannte Eindrehen nur einmal auf jeder Bearbeitungsseite erfolgen muss (an Stirnseite 33 und 34). Bei der Einzelteilbearbeitung müsste bei jedem Werkstück 1, 2 auf jeder Seite einmal eingedreht werden, was sich nachteilig auf die Bearbeitungszeit auswirkt.

Fig. 5 zeigt das Werkzeug 31 in einer Stellung, in der sich seine Drehachse 30 in X-Richtung vor den Enden 32, 33 der Werkstücke 1, 2 befindet, d.h. bei der stirnseitigen Bearbeitung der Enden 32, 33, bei der die Vorschubeinheiten I, II und die Werkstücke 1, 2 feststehen und sich das Werkzeug 31 in der Y-Achse in Pfeilrichtung 36 bewegt.

Die Werkstücke 1, 2 werden mit den Tischen 4, 5 in X-Richtung jeweils so verfahren, dass die Werkzeugeinheit 15 mit ihrem Endenbearbeitungswerkzeug 31 die Stirnseiten 32, 33; 34, 35 der Werkstücke 1, 2 bearbeiten kann. Grundsätzlich ist es auch möglich, für die Bearbeitung der Stirnseiten 32, 33 die Werkzeugeinheit 15 und für die Bearbeitung der Stirnseiten 34, 35 die Werkzeugeinheit 16 heranzuziehen.

An den beiden Stirnseiten der Werkstücke 1, 2 können auch Stirnbohrungen ohne zusätzliches Anstellen und Abfahren der Werkstücke 1, 2 und der Werkzeuge 31 angebracht werden. Sobald die beiden Enden 32 bis 35 der Werkstücke 1, 2 bearbeitet worden sind, werden die Tische 4 und 5 in Y-Richtung gegensinnig zueinander so weit auseinander gefahren, dass mit einem entsprechenden Werkzeug die einander zugewandten Längsseiten 25, 26 der Werkstücke 1, 2 längsbearbeitet werden können. Die Spannzangen 19, 20 der Tische 4, 5 sind, wie beispielhaft aus den Fig. 4 und 5 hervorgeht, so angesetzt, dass die Längsseiten 25, 26 ausreichenden Abstand von den auf der Oberseite der Werkstücke 1, 2 aufliegenden Spannzangen 19, 20 haben. Zudem sind die Werkstücke 1, 2 so eingespannt, dass sie ausreichend weit über den jeweiligen Tisch 4, 5 bzw. deren Auflageflächen 23, 24 überstehen (Fig. 2 und 3).

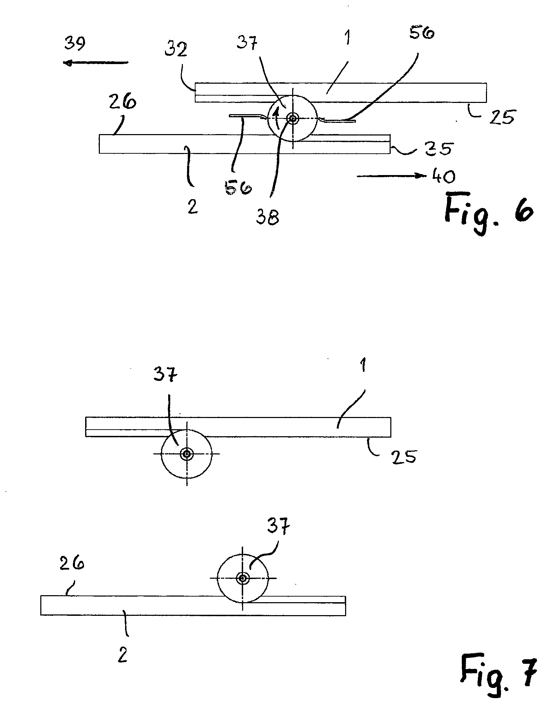

Die Längsbearbeitung der Werkstücke 1, 2 erfolgt mit einem Längsbearbeitungswerkzeug 37 (Fig. 6). Es ist um eine vertikale Achse 38 drehbar und Teil der Werkzeugeinheit 15, 16, die am Portal 14 vorgesehen ist. In die Werkzeugeinheiten 15, 16 können Quer- und Längsbearbeitungswerkzeuge eingewechselt werden, so dass jede Werkzeugeinheit 15, 16 die Quer- oder Längsbearbeitung an den Werkstücken 1, 2 durchführen kann.

Mit den Tischen 4, 5 werden die Werkstücke 1, 2 in Y-Richtung so weit auseinander gefahren, dass die beiden Längsseiten 25, 26 der Werkstücke 1, 2 gleichzeitig mit dem Längsbearbeitungswerkzeug 37 bearbeitet werden können (Fig. 6). Das Längsbearbeitungswerkzeug 37 wird in seine Bearbeitungsposition mit der Werkzeugeinheit 16 längs des Portals 14 verfahren. Das um seine Achse 38 drehende Längsbearbeitungswerkzeug erzeugt an beiden Längsseiten 25, 26 der Werkstücke 1, 2 das gleiche Profil. Infolge des gleichzeitigen Werkzeugeingriffes werden die Werkstücke 1, 2 in X-Richtung entgegengesetzt zueinander während der Längsbearbeitung verfahren, was in Fig. 6 durch die Pfeile 39 und 40 angegeben ist. In der Ausgangsstellung liegen die Enden 32 und 35 der Werkstücke 1, 2 auf gleicher Höhe oder zumindest annähernd auf gleicher Höhe. Dann werden die Werkstücke 1, 2 mit ihren Tischen 4, 5 in Verfahrrichtung 39, 40 so weit längs des rotierenden Längsbearbeitungswerkzeuges 37 verfahren, bis die Längsseiten 25, 26 über ihre gesamte Länge bearbeitet sind. Das Längsbearbeitungswerkzeug 37 wird so gedreht, dass die Werkstücke 1, 2 im Gegenlauf oder auch im Gegenlauf bearbeitet werden.

In Fig. 6 sind schematisch zwei Spanleitbleche 56 dargestellt, die diametral einander gegenüberliegen und die bei der spanenden Längsbearbeitung anfallenden Späne ableiten.

In der Regel wird in die Längsseiten 25, 26 der Werkstücke 1, 2 ein Profil eingebracht, so dass das Längsbearbeitungswerkzeug 37 ein entsprechendes Profilierwerkzeug ist. Wenn an den Längsseiten 25, 26 das gleiche Längsprofil an den Werkstücken 1, 2 vorgesehen ist, können die Werkstücke 1, 2, wie aus Fig. 6 hervorgeht, gleichzeitig mit dem Längsbearbeitungswerkzeug 37 bearbeitet werden.

Sind allerdings an den Längsseiten 25, 26 der Werkstücke 1, 2 unterschiedliche Profile vorgesehen, dann ist eine gleichzeitige Bearbeitung durch das Längsbearbeitungswerkzeug 37 nicht möglich.

Es sind dann auch zwei unterschiedliche Längsbearbeitungswerkzeuge erforderlich. Dazu ist der Werkzeugeinheit ein Werkzeugspeicher 41 zugeordnet (Fig. 1), in dem unterschiedliche Werkzeuge gelagert sind, die bei Bedarf einfach mittels einer (nicht dargestellten) Greifeinrichtung in die Werkzeugeinheit 15, 16 eingewechselt werden können.

Fig. 7 zeigt den Fall, dass die beiden Werkstücke 1, 2 beispielsweise wegen Profilungleichheit nicht gleichzeitig durch ein und dasselbe Längsbearbeitungswerkzeug 37 bearbeitet werden können. Darum werden die Werkstücke 1, 2 mit den Tischen 4 und 5 in Y-Richtung so weit auseinander gefahren, dass zunächst die Längsseite 25 des Werkstückes 1 bearbeitet werden kann und das Werkstück 2 ausreichenden Abstand vom Längsbearbeitungswerkzeug 37 hat. Ist die Längsseite 25 des Werkstückes 1 bearbeitet, wird die Werkzeugeinheit 16 mit dem Längsbearbeitungswerkzeug 37 längs des Portals 14 in Y-Richtung so weit verstellt, dass die Längsseite 26 des Werkstückes 2 bearbeitet werden kann. Während der Längsbearbeitung wird das jeweilige Werkstück 1, 2 längs des rotierenden Längsbearbeitungswerkzeuges 37 verfahren.

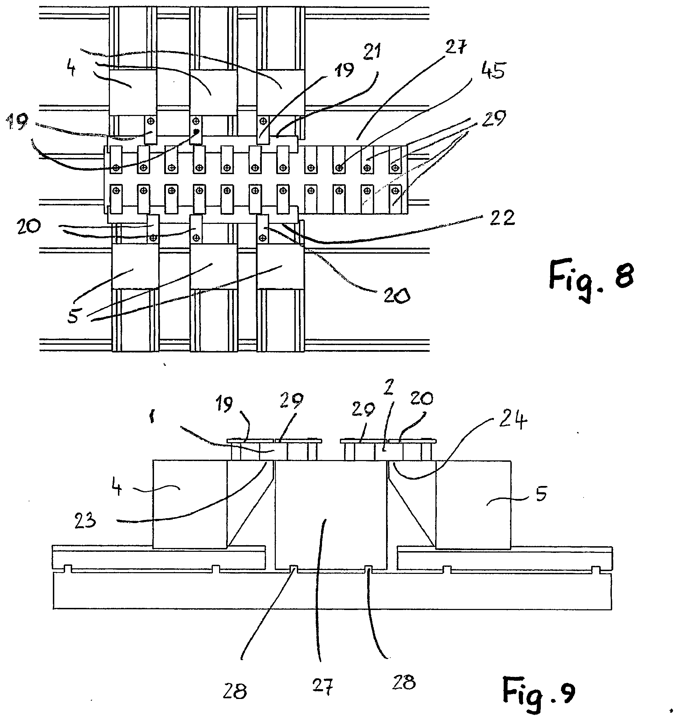

Wenn beide Werkzeugeinheiten 15, 16 eingesetzt werden, können die Längsseiten 25, 26 der beiden Werkstücke 1, 2 auch gleichzeitig mit je einem Längsbearbeitungswerkzeug 37 bearbeitet werden. Sind alle Endenbearbeitungen und die einseitigen Längsbearbeitungen am jeweiligen Werkstück 1, 2 abgeschlossen, werden die Werkstücke 1, 2 dem Tisch 27 der Vorschubeinheit V übergeben. Die Tische 4, 5 werden in Y-Richtung so weit auseinander gefahren, dass der Tisch 27 in X-Richtung längs der Führungen 28 zwischen die Tische 4, 5 fahren kann (Fig. 8 und 9), bzw. umgekehrt die Tische 4, 5 neben den Tisch 27.

Die Spannzangen 29 des Tisches 27 befinden sich in der Freigabestellung, wenn der Tisch 27 zwischen die Tische 4, 5 gefahren wird. Die Werkstückauflage des Tisches 29 wird in bekannter Weise vorteilhaft etwas abgesenkt. Der Tisch 27 wird so weit in X-Richtung verfahren, dass seine Spannzangen 29 die Werkstücke 1, 2, die auf den Tischen 4 und 5 eingespannt sind, übernehmen können. Fig. 8 zeigt die Übergabestellung des Tisches 27. Wenn der Tisch 27 die Übergabestellung erreicht hat, werden die beiden Werkstücke 1, 2 mit den Spannzangen 29 in bekannter Weise gespannt. Die Spannzangen 19, 20 der Tische 4, 5 bleiben in der Spannstellung, so dass die Werkstücke 1, 2 während der Übergabe stets fest eingespannt sind. Sobald die Werkstücke 1, 2 durch die Spannzangen 29 des Tisches 27 gespannt sind, werden die Spannzangen 19, 20 der Tische 4, 5 gelöst und die Auflagen 23, 24 der Tische 4, 5 etwas abgesenkt. Anschließend wird der Tisch 27 mit den eingespannten Werkstücken 1, 2 in X-Richtung weitergefahren. Bei Bedarf können dazu die Tische 4, 5 vorher in Y-Richtung weg vom Tisch 27 so weit nach außen verfahren werden, dass der Tisch 27 mit den eingespannten Werkstücken 1, 2 in X-Richtung weitergefahren werden kann.

Die Spannzangen 29 des Tisches 27 werden so eingestellt, dass sie in Abhängigkeit von der bereits bearbeiteten Längsseite 25, 26 der Werkstücke 1, 2 so auf der Oberseite der Werkstücke aufliegen, dass die Werkstücke 1, 2 zuverlässig gespannt sind. Die nicht bearbeiteten Längsseiten 21, 22 der Werkstücke 1, 2 liegen frei. Die Spannzangen 29 haben ausreichenden Abstand von diesen noch unbearbeiteten Längsseiten 21, 22, so dass diese Längsseiten durch ein entsprechendes Werkzeug problemlos längsbearbeitet werden können. Bei Bedarf und je nach Profil können die Werkstücke auch in einem bei der ersten Längsbearbeitung gebildeten Falz gespannt werden.

Die zur Einspannung der Werkstücke 1, 2 nicht benötigten Spannzangen 29 des Tisches 27 können in eine Grundstellung verstellt werden. Diese Grundstellung kann beispielhaft eine abgesenkte Stellung sein, in der die Spannzangen 29 so weit nach unten verstellt werden können, dass ihre Oberseite zumindest bündig mit der Tischoberseite liegt. Die Grundstellung kann auch dadurch erreicht werden, dass die Spannzangen 29 in Y-Richtung zurückgestellt werden.

Sobald die Werkstücke 1, 2 vom Tisch 27 übernommen worden sind, können die Tische 4, 5 mit Hilfe ihrer Schlitten 8, 9 zurück in die Übergabestellung gemäß Fig. 1 verfahren werden, um neue, noch nicht bearbeitete Werkstücke in der beschriebenen Weise aufnehmen zu können.

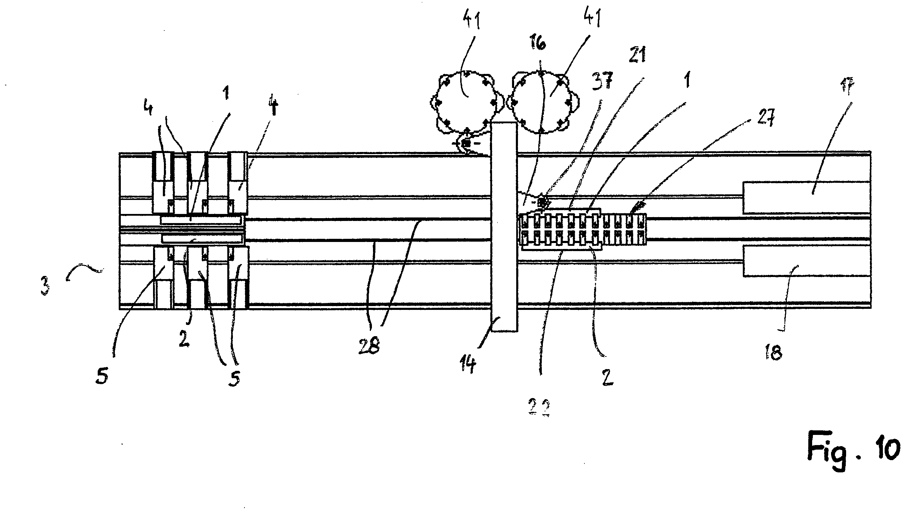

Währenddessen erfolgt die Längsbearbeitung der Werkstücke 1, 2 an ihren Längsseiten 21, 22 mit Hilfe des Längsbearbeitungswerkzeuges 37 der Werkzeugeinheit 16 (Fig. 10). Zur Längsbearbeitung wird der Tisch 27 längs der Führungen 28 in X-Richtung verfahren, wobei das um eine vertikale Achse drehende Längsbearbeitungswerkzeug 37 die Längsseite 21, 22 bearbeitet. Die Werkstücke 1, 2 werden ohne einen Werkzeugwechsel nacheinander an ihren Längsseiten 21, 22 längsbearbeitet. In der Regel werden die Werkstücke über die gesamte Länge dieser Längsseiten 21, 22 bearbeitet, vorzugsweise längsprofiliert. Sobald die eine Längsseite 21 bearbeitet ist, fährt der Tisch 27 in X-Richtung so weit weiter, dass die Werkzeugeinheit 16 längs des Portals 14 in Y-Richtung so verstellt werden kann, dass die Längsseite 22 des Werkstückes 2 bearbeitet werden kann. Auch hierbei wird der Tisch 27 während der Längsbearbeitung in X-Richtung gegenüber der Werkzeugeinheit 16 verfahren.

Die Werkzeugeinheit 16 kann auch so ausgebildet sein, dass das Längsbearbeitungswerkzeug 37 in Z-Richtung verstellt werden kann. Dann besteht die Möglichkeit, nach Beendigung der Längsbearbeitung der Längsseite 21 das Längsbearbeitungswerkzeug 37 in Z-Richtung aufwärts so weit zu verstellen, dass es über den Tisch 27 in Y-Richtung bis zur gegenüberliegenden Längsseite 22 verstellt werden kann. Dort wird das Längsbearbeitungswerkzeug 37 wieder abgesenkt und nunmehr die Längsseite 22 bearbeitet, wobei der Tisch 27 in der erforderlichen X-Richtung verfahren wird.

Es ist auch möglich, die Längsseiten 21, 22 nur über einen Teil ihrer Länge längszubearbeiten. Die Werkzeugeinheit 16 führt entsprechend gesteuerte Bewegungen aus, indem sie in Y-Richtung von dem Werkstück 1, 2 weg fährt. Durch die Verfahrmöglichkeit der Tische 4, 5 in Y-Richtung ist gleiches bei der ersten Längsbearbeitung der Längsseiten 25, 26 auf den Vorschubeinheiten I, II auch dadurch möglich, dass die Tische 4, 5 von der Längsseite des Werkstückes 1, 2 weg fahren.

Sobald die Werkstücke 1, 2 an ihren Längsseiten 21, 22, 25, 26 bearbeitet sind, wird der Tisch 27 zur Abgabeseite in X-Richtung verfahren, an der sich die Ablagetische 17, 18 befinden. Auf sie werden die fertig bearbeiteten Werkstücke 1, 2 nach Lösen der Spannzangen 29 abgelegt.

In der Zwischenzeit werden neue, noch unbearbeitete Werkstücke 1, 2 am Aufgabebereich 3 auf den Tischen 4, 5 eingespannt und zur Werkzeugeinheit 15 verfahren, um in der beschriebenen Weise die Endenbearbeitung dieser Werkstücke vorzunehmen. Mit der Endenbearbeitung kann unmittelbar dann begonnen werden, wenn die Längsbearbeitung der auf dem Tisch 27 gespannten Werkstücke 1, 2 abgeschlossen ist und der Tisch 27 zur Abgabe der fertig bearbeiteten Werkstücke 1, 2 in die Abgabestellung verfährt.

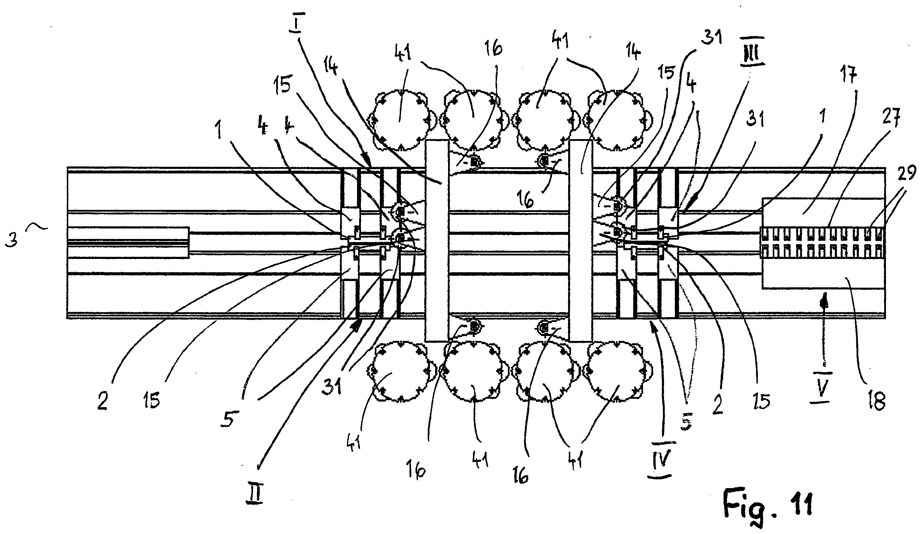

Um eine Leistungssteigerung der Anlage zu erreichen, ist bei der Ausführungsform gemäß Fig. 11 vorgesehen, für die Werkstücke 1, 2 die Vorschubeinheiten I, II, III, IV mit den Tischen 4, 5 in doppelter Ausführung vorzusehen.

Es können auch zwei Portale 14 vorgesehen sein, denen jeweils vier Werkzeugspeicher 41 zugeordnet sind. Beide Portale 14 sind jeweils mit vier Werkzeugeinheiten 15, 16 versehen.

In Fig. 11 ist beispielhaft dargestellt, wie mit den Werkzeugeinheiten 15 bzw. ihren Endenbearbeitungswerkzeugen 31 des linken Portales 14 die dem Abgabebereich zugewandten Enden der Werkstücke 1, 2 und mit den Werkzeugeinheiten 15 bzw. ihren Endenbearbeitungswerkzeugen 31 des rechten Portales 14 die vom Abgabebereich abgewandten Enden der Werkstücke 1, 2 in der beschriebenen Weise bearbeitet werden. Da die Tische 4, 5 doppelt vorhanden sind, erfolgt die Bearbeitung dieser beiden Enden der Werkstücke 1, 2 parallel, wodurch eine hohe Leistungssteigerung erzielt wird.

Sobald die Werkstücke 1, 2 an den Enden fertig bearbeitet sind, werden die Tische 4, 5 in der beschriebenen Weise in Y-Richtung so weit auseinander gefahren, dass die einander zugewandten Längsseiten 25, 26 der Werkstücke 1, 2 gleichzeitig mit den entsprechenden Längsbearbeitungswerkzeugen 37 bearbeitet werden können.

Nach Abschluss der Enden- und der einseitigen Längsbearbeitung sämtlicher Werkstücke 1, 2 werden die Tische 4, 5 in Y-Richtung so weit auseinander gefahren, dass der Tisch 27 der Vorschubeinheit V zwischen die Tische 4 und 5 gefahren werden kann, um in der beschriebenen Weise die an einer Längsseite bearbeiteten Werkstücke 1, 2 von den Tischen 4, 5 aufzunehmen. Wie anhand der vorigen Ausführungsform beschrieben worden ist, werden die Werkstücke 1, 2 auf dem Tisch 27 so eingespannt, dass die andere, nicht bearbeitete Längsseite nunmehr durch ein entsprechendes Längsbearbeitungswerkzeug bearbeitet werden kann.

Im Unterschied zur vorigen Ausführungsform befinden sich auf dem Tisch 27 auf beiden Längsseiten jeweils zwei Werkstücke 1 und 2, die hintereinander angeordnet sind, so dass sie in einem Zug durch das entsprechende Längsbearbeitungswerkzeug bearbeitet werden können.

Sobald die Werkstücke 1, 2 an allen Enden und Längsseiten fertig bearbeitet sind, fährt der Tisch 27 an den Abgabebereich und übergibt die fertig bearbeiteten Werkstücke 1, 2 den Abgabetischen 17, 18.

Mit einer solchen Anlage sind vielfältige, von dem Ausführungsbeispiel abweichende Fertigungsabläufe und Bearbeitungsreihenfolgen bei hoher Flexibilität und Fertigungsleistung möglich. So ist es beispielsweise möglich, die in den Vorschubeinheiten I und II teilbearbeiteten Werkstücke 1, 2 den Vorschubeinheiten III, IV zu übergeben, um die noch nicht bearbeitete Längsseite der Werkstücke zu bearbeiten. Es kann somit beispielsweise die Vorschubeinheit III in X-Richtung in Fig. 11 so weit verfahren werden, dass die Vorschubeinheit I neben die Vorschubeinheit IV gefahren werden kann. Dann kann die Vorschubeinheit IV das teilbearbeitete Werkzeug 1 von der Vorschubeinheit I so übernehmen, dass die noch nicht bearbeitete Längsseite des Werkstückes in der beschriebenen Weise bearbeitet werden kann.

In gleicher Weise kann die Vorschubeinheit II in X-Richtung an die Position der Vorschubeinheit IV gefahren werden, die zuvor in X-Richtung weggefahren ist. Sobald die Vorschubeinheit II der Vorschubeinheit III gegenüberliegt, kann das teilbearbeitete Werkstück 2 von der Vorschubeinheit II an die Vorschubeinheit III in der beschriebenen Weise übergeben werden, um die andere Längsseite dieses Werkstückes 2 zu bearbeiten.

Die Anlage zeichnet sich dadurch aus, dass die Vorschubeinheiten I, II, III, IV durch einzelne Zangentische (Einzelzangentische) gebildet wird, die individuell in unterschiedliche Abstände zueinander verfahren werden und die Werkstücke 1, 2 so an unterschiedlichen Positionen spannen können. Im Vergleich zu bekannten Anlagen, bei denen die Vorschubeinheiten eine Vielzahl an Spannzangen über ihre Länge aufweisen, die jedoch in Längsrichtung starr angeordnet und zur Erzielung der Flexibilität zum Einspannen verschieden zu bearbeitender Werkstücke individuell unter die Auflageebene absenkbar sind, ergeben sich einige wesentliche Vorteile: Flexiblere Bearbeitungsmöglichkeiten an den Längsseiten durch noch flexibleres Spannen, Einspannen mit beidseitigem optimalem Endenüberstand für die Querbearbeitung und optimale Einspannung und Übergabemöglichkeit von kurzen Werkstücken.

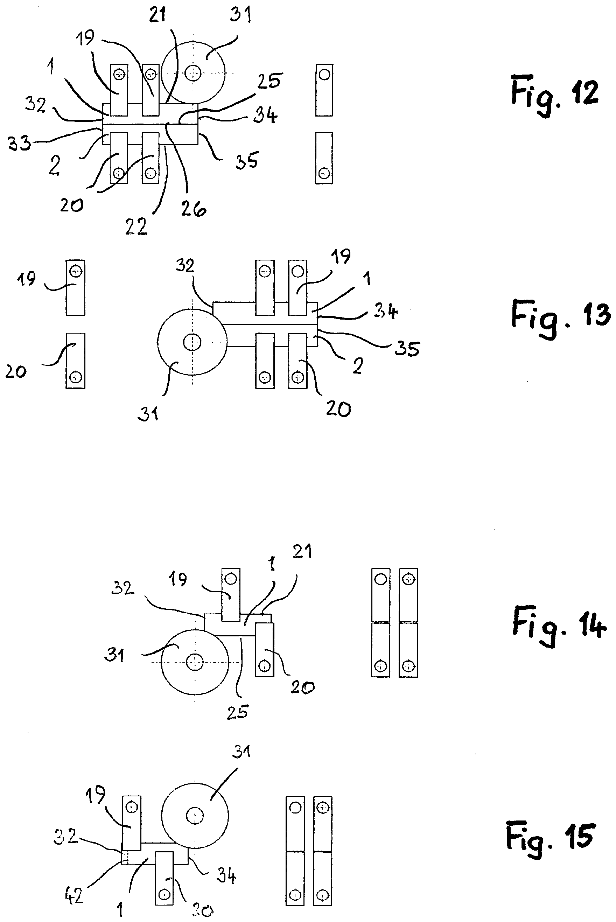

Die Fig. 12 bis 15 zeigen, wie auch Kurzteile effektiv an ihren Enden und an ihren Längsseiten bearbeitet werden können. Solche kurzen Werkstücke lassen sich einfach und dennoch zuverlässig einspannen, weil für die Werkstücke die getrennten Tische 4 und 5 vorgesehen sind, die jeweils eine Spannzange aufweisen. Je nach Länge der Werkstücke 1, 2 kann somit zum Einspannen der kurzen Werkstücke nur ein Teil der Tische 4 bzw. 5 verwendet werden.

Fig. 12 zeigt zwei kurze Werkstücke 1, 2 (Kurzteile), die mit ihren Längsseiten 25, 26 aneinander liegen. Zum Einspannen dieser beiden Werkstücke 1, 2 werden nur jeweils zwei Tische 4 und 5 verwendet, von denen in Fig. 12 nur die zugehörigen Spannzangen 19, 20 dargestellt sind. Die dritten Tische 4, 5 sind in X-Richtung so weit weggefahren, dass die zu bearbeitenden Enden 34, 35 mit dem Endenbearbeitungswerkzeug 31 bearbeitet werden können.

Die Werkstücke 1, 2 sind mittels der jeweils beiden Tische 4, 5 nahe den den zu bearbeitenden Enden 34, 35 gegenüberliegenden Enden 32, 33 gespannt, so dass ein ausreichender Überstand der Enden 34, 35 zur stirnseitigen Bearbeitung gegeben ist. Dieser notwendige Überstand resultiert aus dem vorher beschriebenen Verfahren des Eindrehens in Abhängigkeit vom maximalen Werkzeugflugkreisdurchmesser. Fig. 12 zeigt die Ausgangsposition des Werkzeuges 31 für dieses Eindrehen.

Nach dieser Endenbearbeitung erfolgt ein Umspannen in der Weise, dass mit dem Endenbearbeitungswerkzeug 31 die anderen Enden 32, 33 der Werkstücke 1, 2 bearbeitet werden können. Die zunächst in X-Richtung weggefahrenen, in Figur 12 rechten Tische 4, 5 werden nach Wegfahren des Endenbearbeitungswerkzeuges 31 in X-Richtung so weit nach links zurückgefahren, dass ihre Spannzangen 19, 20 die Werkstücke 1, 2 nahe den bearbeiteten Enden 34, 35 einspannen können. Die Spannzangen der beiden anderen Tische 4, 5 verbleiben hierbei noch in der Spannstellung, so dass die Werkstücke 1, 2 beim Umspannen nicht verrutschen können.

Sobald die Werkstücke 1, 2 mit allen Spannzangen 19, 20 eingespannt sind, werden die Spannzangen 19, 20 der jeweiligen linken Tische 4, 5 gelöst, die anschließend in X-Richtung nach links zurückgefahren werden. Nunmehr liegen die Enden 32, 33 der Werkstücke 1, 2 frei, so dass sie mit dem Endenbearbeitungswerkzeug 31 in der beschriebenen Weise in einem Arbeitsgang bearbeitet werden können. Fig. 13 zeigt das Werkzeug 31 in der Stellung unmittelbar nach dem Eindrehen, ab der die stirnseitige Bearbeitung nur durch das Verfahren des Werkzeuges 31 in Y-Richtung erfolgt.

Sobald beide Enden der Werkstücke 1, 2 bearbeitet sind, werden die diese Werkstücke 1, 2 haltenden Tische 4, 5, wie anhand der Fig. 1 bis 11 beschrieben worden ist, in Y-Richtung auseinander gefahren, so dass die Längsseiten 25, 26 bearbeitet und danach der Tisch 27 zwischen die Tische 4, 5 fahren kann. Dann werden die an ihren Enden und der einen Längsseite 25, 26 bearbeiteten Werkstücke 1, 2 dem Tisch 27 übergeben, mit dem die Werkstücke eingespannt und an ihren anderen Längsseiten 21, 22 in der beschriebenen Weise bearbeitet werden können.

Die Fig. 14 und 15 zeigen die Möglichkeit, mit der Anlage auch solche kurzen Werkstücke zu bearbeiten, die nicht als Doppelteile (Fig. 12 und 13) bearbeitet werden können. In diesem Falle werden die Enden nur eines Werkstückes mit dem Endenbearbeitungswerkzeug 31 bearbeitet. Zum Einspannen dieses kurzen Werkstückes 1 dienen nur die beiden linken Tische 4 und 5, von denen jeweils nur die Spannzange 19 und 20 dargestellt ist. Im Unterschied zu den vorigen Ausführungsbeispielen werden die einander gegenüberliegenden endseitigen Tische 4 und 5 in X-Richtung versetzt zueinander so angeordnet, dass die Spannzangen 19, 20 in X-Richtung versetzt zueinander am Werkstück 1 angreifen. Die Spannzange 20 des Tisches 5 greift an dem in Fig. 14 rechten Endbereich des Werkstückes 1 an, während die Spannzange 19 des Tisches 4 an der gegenüberliegenden Seite mit Abstand vom zu bearbeitenden Ende 32 das Werkstück 1 spannt. Beide Spannzangen 19, 20 sind so angeordnet, dass mit dem Endenbearbeitungswerkzeug 31 das Ende 32 des Werkstückes 1 bearbeitet werden kann. Hierbei führt das Endenbearbeitungswerkzeug 31 die anhand der Fig. 4 und 5 beschriebene Bewegung aus.

Die beiden Spannzangen 19, 20 greifen von den einander gegenüberliegenden Längsseiten 21, 25 aus so über das Werkstück 1, dass die Spannzangen 19, 20 beim Verfahren der Tische 4, 5 in X-Richtung aneinander vorbeibewegt werden können.

Ist das Ende 32 bearbeitet, werden die Tische 4, 5 so in X-Richtung verstellt, dass das gegenüberliegende Ende 34 des Werkstückes 1 mit dem Endenbearbeitungswerkzeug 31 bearbeitet werden kann. Dieser Umspannvorgang erfolgt in der Weise, dass das Werkstück 1 stets eingespannt bleibt, so dass seine Position unverändert ist. Dieser Umspannvorgang kann beispielsweise so erfolgen, dass zunächst der Tisch 4 mit seiner Spannzange 19 in X-Richtung so weit nach links verfahren wird, dass die Spannzange 19 das Werkstück 1 im Bereich des bearbeiteten Endes 32 spannt. Während des Verfahrens des Tisches 4 wird das Werkstück 1 durch die Spannzange 20 des gegenüberliegenden Tisches 5 eingespannt gehalten. Sobald das Werkstück 1 mit der Spannzange 19 in der neuen Position festgespannt ist, wird die Spannzange 20 gelöst und der Tisch 5 so weit in X-Richtung nach links zurückgefahren, dass das Endenbearbeitungswerkzeug 31 das unbearbeitete Ende 34 in der beschriebenen Weise bearbeiten kann.

In Fig. 15 ist durch eine gestrichelte Linie 42 beispielhaft ein Endenprofil angedeutet, das mit dem Endenbearbeitungswerkzeug 31 erzeugt worden ist.

Während der beschriebenen Endenbearbeitung der Kurzteile 1 sind die beiden anderen Tische 4, 5 so weggefahren, dass sie die Endenbearbeitung des Werkstückes 1 nicht behindern.

Da bei der Vorgehensweise gemäß den Fig. 14 und 15 jeweils nur ein Werkstück an seinen Enden bearbeitet werden kann, werden diese Werkstücke nach der Endenbearbeitung und einseitigen Längsbearbeitung einzeln nacheinander dem Tisch 27 übergeben. Da er an beiden in X-Richtung verlaufenden Längsseiten eine Mehrzahl von Spannzangen 29 aufweist, können auf dem Tisch 27 auch mehrere kurze Werkstücke gleichzeitig an einander gegenüberliegenden Längsseiten des Tisches 27 eingespannt werden. Dann können in der beschriebenen Weise diese einander gegenüber liegenden kurzen Werkstücke in einem Arbeitsgang bearbeitet werden, wie es anhand der Fig. 6 bis 10 beschrieben worden ist.

Die Tische 4, 5, 27 sind so ausgebildet, dass die gespannten Werkstücke 1, 2 mit ihrer Unterseite auf den ebenen Auflageflächen 23, 24 (Fig. 2) aufliegend mit den Spannzangen 19, 20, 29 gespannt werden. Die Spannzangen selbst können in geeigneter und bekannter Weise aus der Spannstellung in die Freigabestellung verstellt werden. Beispielsweise ist es möglich, die Spannzangen um vertikale Achsen 43, 44, 45 (Fig. 4 und 8) zu verschwenken. Die Spannzangen 19, 20, 29 sind vorteilhaft als einarmige Hebel ausgebildet, die, in Z-Richtung gesehen, rechteckigen Umriss haben. Die Schwenkachsen 43 bis 45 befinden sich an einem Ende der Spannzangen 19, 20, 29. Die Schwenkachsen 43 bis 45 sind für den Spannvorgang in Z-Richtung verstellbar.

Bei einer solchen Ausbildung lassen sich die Spannzangen 19, 20, 29 beispielsweise um 90° oder um 180° aus der in den Zeichnungen dargestellten Spannstellung in die Freigabestellung verschwenken. In diesem Falle lassen sich die einzuspannenden Werkstücke 1, 2 in einfacher Weise von oben auf die Auflageflächen 23, 24 der Tische 4, 5, 27 auflegen.

Es besteht auch die Möglichkeit, die Spannzangen 19, 20, 29 lediglich in Z-Richtung verstellbar auszubilden. Dann befinden sich die Spannzangen 19, 20, 29 in der Ruhestellung in einem ausreichend großen Abstand von den Auflageflächen 23, 24 der Tische 4, 5, 27, so dass die zu bearbeitenden Werkstücke einfach in X- oder in Y-Richtung auf die Tische aufgelegt werden können.

Die Spannzangen 29 des Tisches 27 können darüber hinaus so ausgebildet sein, dass sie so weit in Z-Richtung nach unten verstellt werden können, dass die Oberseite der Spannzangen 29 zumindest bündig mit der Auflagefläche des Tisches 27 liegt. Dann stehen über die Auflagefläche des Tisches 27 nur diejenigen Spannzangen 29 vor, die am Spannvorgang beteiligt sind.

Vorteilhaft für die Übergabe der Werkstücke 1, 2 ist auch, wenn sich die Auflageflächen 23, 24 der Tische 4, 5 und die Auflageflächen des Tisches 27 in geringem Maß absenken lassen. Dann kann ein auf einem der Tische eingespanntes Werkstück beim Fahren in die Übergabestellung nicht in Berührung mit der Auflagefläche desjenigen Tisches kommen, an den es übergeben werden soll. Damit werden Beschädigungen an der Auflageseite des Werkstückes 1, 2 vermieden.

Bei der Anlage gemäß den Fig. 1 bis 10 ist für die Endenbearbeitungswerkzeuge 31 und für die Längsbearbeitungswerkzeuge 37 jeweils ein Werkzeugspeicher 41 vorgesehen, in dem die entsprechenden Werkzeuge für die Enden- und die Längsbearbeitung der Werkstücke 1, 2 abgelegt sind. Zum Ein- und Auswechseln der Werkzeuge können Greifeinrichtungen eingesetzt werden, die für sich bekannt sind und darum nicht näher beschrieben werden.

Bei der Ausführungsform der Anlage gemäß Fig. 11 sind an den Portalen 14 für die Enden- und die Längsbearbeitungswerkzeuge jeweils zwei Werkzeugspeicher 41 vorgesehen, wodurch eine noch größere Zahl an Werkzeugen vorgehalten werden können.

Fig. 16 zeigt ein Beispiel eines Werkzeugspeichers 41, der sich dadurch auszeichnet, dass er bei kompakter Ausbildung eine große Zahl von Werkzeugen 54 speichern kann. Von ihnen sind in Fig. 16 nur die Umrisse dargestellt.

Der Werkzeugspeicher 41 hat einen ringförmigen Grundkörper 46, an dessen Außenseite Speicherplätze 47 für die Werkzeuge 54 vorgesehen sind. Die Speicherplätze 47 sind mit zangenförmigen Aufnahmen 48 versehen, in welche die Werkzeuge 54 eingesetzt und in denen sie in bekannter Weise gehalten werden. Damit die Werkzeuge 54 einfach und zuverlässig im Speicherplatz 47 abgelegt sowie aus dem Speicherplatz herausgenommen werden können, sind die Werkzeuge 54 vorteilhaft mit einer Greifernut versehen, in die der Greifer einer Wechseleinrichtung eingreift.

Der Grundkörper 46 umgibt zwei rechtwinklig zueinander liegende, einander kreuzende Stege 49, 50, die mit ihren Enden an die Innenseite des Grundkörpers 46 angeschlossen sind. Der Grundkörper 46 und die Stege 49, 50 können einstückig miteinander ausgebildet sein.

Die Stege 49, 50 begrenzen zusammen mit dem Grundkörper 46 Aufnahmeräume 51, in denen sich weitere Speicherplätze 52, 53 für Werkzeuge 54 befinden. Die Speicherplätze 52 befinden sich innerhalb des jeweiligen Aufnahmeraumes 51 an der Innenseite des Grundkörpers 46. Die Speicherplätze 53 sind im Bereich des Kreuzungspunktes der Diametralstege 49, 50 vorgesehen.

Die Aufnahmeräume 51 sind jeweils so ausgebildet, dass die innen liegenden Werkzeuge 54 einfach ein- und ausgewechselt werden können. Der Werkzeugspeicher 41 ist um seine zentrale Achse 55 drehbar, so dass in einfacher Weise das gewünschte Werkzeug 54 in den Griffbereich der Greiferwechseleinrichtung gebracht werden kann.

Der Werkzeugspeicher 41 wird gesteuert in die gewünschte Lage gedreht, so dass der Werkzeugwechsel rasch vorgenommen werden kann.

In die inneren Speicherplätze 52, 53 werden bevorzugt Werkzeuge 54 eingesetzt, die kleinen Durchmesser haben. Solche Werkzeuge 54 sind beispielsweise Bohrer oder Schaftfräser oder auch Fräswerkzeuge mit kleinem Durchmesser. An der Außenseite des Grundkörpers 46 können, da mehr Platz vorhanden ist, Werkzeuge 54 mit größerem Durchmesser abgelegt werden.

## Patentansprüche

1. Anlage zum Bearbeiten von Werkstücken (1, 2) aus Holz, Kunststoff und dergleichen, mit wenigstens einer Bearbeitungseinheit (15, 16) zur Endenbearbeitung und Längsbearbeitung der Werkstücke (1, 2), und mit wenigstens zwei Vorschubeinheiten (I bis IV), die jeweils wenigstens einen Tisch (4, 5) mit Spannelementen (19, 20) zum Einspannen der Werkstücke (1, 2) aufweisen, in X-Richtung gesehen nebeneinander liegen und in X-Richtung mittels Antrieben längs Führungen (10) verfahrbar sind, wobei die beiden Vorschubeinheiten (I bis IV) jeweils wenigstens zwei Tische (4, 5) aufweisen, und wobei die Tische (4, 5) jeder Vorschubeinheit (I bis IV) in X-Richtung relativ zueinander und mittels weiterer Antriebe in Y-Richtung verstellbar sind.

2. Anlage nach Anspruch 1,
**dadurch gekennzeichnet, dass** die Tische (4, 5) der beiden Vorschubeinheiten (I bis IV) unabhängig voneinander in X- und/oder Y-Richtung verstellbar sind.

3. Anlage nach Anspruch 1 oder 2,
**dadurch gekennzeichnet, dass** die Tische (4, 5) der beiden Vorschubeinheiten (I bis IV) auf Schlitten (8, 9) angeordnet sind, die in X-Richtung längs der Führungen (10) verfahrbar sind und in Y-Richtung verlaufende Führungen (13) für die Tische (4, 5) aufweisen.

4. Anlage nach einem der Ansprüche 1 bis 3,
**dadurch gekennzeichnet, dass** wenigstens eine weitere Vorschubeinheit (V) vorgesehen ist, die in X-Richtung verfahrbar ist.

5. Anlage nach Anspruch 4,
**dadurch gekennzeichnet, dass** die weitere Vorschubeinheit (V) längs einer weiteren Führung (28) verfahrbar ist, die sich, in X-Richtung gesehen, zwischen den Führungen (10) der beiden anderen Vorschubeinheiten (I bis IV) befindet.

6. Anlage nach Anspruch 4 oder 5,
**dadurch gekennzeichnet, dass** die weitere Vorschubeinheit (V) eine Spanneinrichtung (29) aufweist, mit der die Werkstücke (1, 2) einspannbar sind, und dass die Spanneinrichtung (29) vorteilhaft in zwei einander gegenüberliegenden, in X-Richtung verlaufenden Reihen angeordnete Spannzangen aufweist.

7. Anlage nach einem der Ansprüche 4 bis 6,
**dadurch gekennzeichnet, dass** die weitere Vorschubeinheit (V) zwischen die in Y-Richtung auseinander gefahrenen Tische (4, 5) der beiden anderen Vorschubeinheiten (I bis IV) verfahrbar ist.

8. Anlage nach einem der Ansprüche 1 bis 7,
**dadurch gekennzeichnet, dass** die Bearbeitungseinheiten (15, 16) an wenigstens einem Portal (14) vorgesehen sind, das sich mit Abstand über die Führungen (10, 28) für die Vorschubeinheiten (I bis IV, V) erstreckt.

9. Anlage nach einem der Ansprüche 1 bis 8,
**dadurch gekennzeichnet, dass** die Anlage an einem Abgabebereich wenigstens einen Abgabetisch (17, 18) aufweist, der vorteilhaft in X-Richtung gesehen, neben dem Verfahrweg der weiteren Vorschubeinheit (V) angeordnet ist.

10. Verfahren zum Bearbeiten von Werkstücken aus Holz, Kunststoff und dergleichen, unter Verwendung der Anlage gemäß einem der Ansprüche 1 bis 9, **dadurch gekennzeichnet, dass** wenigstens zwei Werkstücke (1, 2) auf Tischen (4, 5) von wenigstens zwei Vorschubeinheiten (I bis IV) gespannt werden, dass die Tische (4, 5) jeder Vorschubeinheit (I bis IV) in X-Richtung relativ zueinander verstellbar sind, dass die Tische (4, 5) in Y-Richtung so zusammengefahren werden, dass die Werkstücke (1, 2) mit ihren einander zugewandten Längsseiten (25, 26) aneinander liegen, und dass die Werkstücke (1, 2) mit ihren Längsseiten (25, 26) aneinander liegend an ihren Enden (32 bis 35) jeweils in einem Arbeitsgang bearbeitet werden.

11. Verfahren nach Anspruch 10,
**dadurch gekennzeichnet, dass** die Werkstücke (1, 2) nach der Endenbearbeitung quer zu ihren aneinander liegenden Längsseiten (25, 26) so weit auseinander gefahren werden, dass diese Längsseiten (25, 26) längsbearbeitet werden können.

12. Verfahren nach Anspruch 10 oder 11,
**dadurch gekennzeichnet, dass** die beiden Längsseiten (25, 26) der Werkstücke (1, 2) gleichzeitig mit mindestens einem Längsbearbeitungswerkzeug (31) bearbeitet werden.

13. Verfahren nach Anspruch 10 oder 11,
**dadurch gekennzeichnet, dass** die beiden Längsseiten (25, 26) der Werkstücke (1, 2) nacheinander mit mindestens einem Längsbearbeitungswerkzeug (31) bearbeitet werden.

14. Verfahren nach einem der Ansprüche 10 bis 13,
**dadurch gekennzeichnet, dass** die Werkstücke (1, 2) nach der Bearbeitung ihrer einen Längsseite (25, 26) an eine weitere Vorschubeinheit (V) so übergeben werden, dass die andere Längsseite (21, 22) der Werkstücke (1, 2) bearbeitet werden kann.

15. Verfahren nach Anspruch 14,
**dadurch gekennzeichnet, dass** die Werkstücke (1, 2) bei der Übergabe eingespannt bleiben.

## Claims

1. System for machining workpieces (1, 2) made of wood, plastic and the like, comprising at least one machining unit (15, 16) for end machining and longitudinal machining of the workpieces (1, 2), and comprising at least two feed units (I to IV), each of which has at least one table (4, 5) with clamping elements (19, 20) for clamping the workpieces (1, 2), which lie next to one another when viewed in the X direction and which can be moved along guides (10) in the X direction by means of drives, wherein the two feed units (I to IV) each have at least two tables (4, 5) and wherein the tables (4, 5) of each feed unit (I to IV) can be adjusted relative to each other in the X direction and by means of further drives in the Y direction.

2. System according to Claim 1, **characterized in that** the tables (4, 5) of the two feed units (I to IV) can be adjusted independently of one another in the X and/or Y direction.

3. System according to Claim 1 or 2, **characterized in that** the tables (4, 5) of the two feed units (I to IV) are arranged on slides (8, 9) which can be moved in the X direction along the guides (10) and have guides (13) running in the Y direction for the tables (4, 5).

4. System according to one of Claims 1 to 3, **characterized in that** at least one further feed unit (V) is provided, which can be moved in the X direction.

5. System according to Claim 4, **characterized in that** the further feed unit (V) can be moved along a further guide (28) which, when viewed in the X direction, is located between the guides (10) of the other two feed units (I to IV).

6. System according to Claim 4 or 5, **characterized in that** the further feed unit (V) has a clamping device (29) with which the workpieces (1, 2) can be clamped, and that the clamping device (29) advantageously has collet chucks arranged in two mutually opposite rows extending in the X direction.

7. System according to one of Claims 4 to 6, **characterized in that** the further feed unit (V) can be moved between the tables (4, 5) of the other two feed units (I to IV) which are moved apart in the Y direction.

8. System according to one of Claims 1 to 7, **characterized in that** the machining units (15, 16) are provided on at least one portal (14) which extends at a distance over the guides (10, 28) for the feed units (I to IV, V).

9. System according to one of Claims 1 to 8, **characterized in that** the system has at least one delivery table (17, 18) on a delivery area, which is advantageously arranged next to the travel path of the further feed unit (V), when viewed in the X direction.

10. Method for machining workpieces made of wood, plastic and the like, using the system according to one of Claims 1 to 9, **characterized in that** at least two workpieces (1, 2) are clamped on tables (4, 5) of at least two feed units (I to IV), that the tables (4, 5) of each feed unit (I to IV) can be adjusted relative to one another in the X direction, that the tables (4, 5) are moved together in the Y direction so that the workpieces (1, 2) abut against each other with their longitudinal sides (25, 26) facing one another, and that the workpieces (1, 2) with their longitudinal sides (25, 26) abutting against each other at their ends (32 to 35) are each machined in one operation.

11. Method according to Claim 10, **characterized in that** after the end machining the workpieces (1, 2) are moved so far apart from one another transversely to their abutting longitudinal sides (25, 26) that these longitudinal sides (25, 26) can be machined longitudinally.

12. Method according to Claim 10 or 11, **characterized in that** the two longitudinal sides (25, 26) of the workpieces (1, 2) are machined simultaneously with at least one longitudinal machining tool (31).

13. Method according to Claim 10 or 11, **characterized in that** the two longitudinal sides (25, 26) of the workpieces (1, 2) are machined one after the other with at least one longitudinal machining tool (31).

14. Method according to one of Claims 10 to 13, **characterized in that** the workpieces (1, 2) are transferred to a further feed unit (V) after machining one longitudinal side (25, 26) thereof such that the other longitudinal side (21, 22) of the workpieces (1, 2) can be machined.

15. Method according to claim 14, **characterized in that** the workpieces (1, 2) remain clamped during transfer.

## Revendications

1. Installation, destinée à usiner des pièces (1, 2) en bois, en matière plastique et analogues, pourvue d'au moins une unité d'usinage (15, 16) pour l'usinage d'extrémités et l'usinage en longueur des pièces (1, 2), et pourvue d'au moins deux unités d'avance (I à IV), dont chacune comporte au moins une table (4, 5) pourvue d'éléments de bridage (19, 20), destinés à brider les pièces (1, 2) qui se situent côte à côte, considérées dans la direction X et qui sont déplaçables dans la direction X, par entraînement le long de guidages (10), les deux unités d'avance (I à IV) comportant chacune au moins deux tables (4, 5) et les tables (4, 5) de chaque unité d'avance (I à IV) étant ajustables dans la direction X, l'une par rapport à l'autre et au moyen d'entraînements supplémentaires dans la direction Y.

2. Installation selon la revendication 1,
**caractérisée en ce que** les tables (4, 5) des deux unités d'avance (I à IV) sont ajustables indépendamment l'une de l'autre dans la direction X et/ou Y.

3. Installation selon la revendication 1 ou 2,
**caractérisée en ce que** les tables (4, 5) des deux unités d'avance (I à IV) sont placées sur des chariots (8, 9) qui sont déplaçables dans la direction X le long des guidages (10) et qui comportent des guidages (13) s'écoulant dans la direction Y pour les tables (4, 5).

4. Installation selon l'une quelconque des revendications 1 à 3, **caractérisée en ce qu'**il est prévu au moins une unité d'avance (V) supplémentaire, qui est déplaçable dans la direction X.

5. Installation selon la revendication 4,
**caractérisée en ce que** l'unité d'avance (V) supplémentaire est déplaçable le long d'un guidage (28) supplémentaire, qui considéré dans la direction X, se trouve entre les guidages (10) des deux autres unités d'avance (I à IV).

6. Installation selon la revendication 4 ou 5,
**caractérisée en ce que** l'unité d'avance (V) supplémentaire comporte une unité de bridage (29), à l'aide de laquelle les pièces (1,2) peuvent être bridées et **en ce que** l'unité de bridage (29) comporte des pinces de serrage, placées avantageusement dans deux rangées mutuellement opposées s'écoulant dans la direction X.

7. Installation selon l'une quelconque des revendications 4 à 6, **caractérisée en ce que** l'unité d'avance (V) supplémentaire est déplaçable entre les tables (4, 5) écartées en direction Y des deux autres unités d'avance (I à IV).

8. Installation selon l'une quelconque des revendications 1 à 7, **caractérisée en ce que** les unités d'usinage (15, 16) sont prévues sur au moins un portique (14), qui s'étend avec un écart au-delà des guidages (10, 28) pour les unités d'avance (I à IV, V).

9. Installation selon l'une quelconque des revendications 1 à 8, **caractérisée en ce que** l'installation comporte dans une zone de distribution au moins une table de distribution (17, 18), qui avantageusement considérée dans la direction X, est placée à côté du trajet de distribution de l'unité d'avance (V) supplémentaire.

10. Procédé, destiné à usiner des pièces en bois, en matière plastique et analogues, en utilisant l'installation selon l'une quelconque des revendications 1 à 9,
**caractérisée en ce que** l'on bride au moins deux pièces (1, 2) sur des tables (4, 5) d'au moins deux unités d'avance (I à IV), **en ce que** les tables (4, 5) de chaque unité d'avance (I à IV) sont ajustables l'une par rapport à l'autre dans la direction X, **en ce que** l'on rassemble les tables (4, 5) dans la direction Y, de telle sorte que les pièces (1, 2) soient adjacentes l'une à l'autre par leurs côtés longitudinaux (25, 26) qui se font face, et **en ce que** l'on usine les pièces (1, 2) avec leurs côtés longitudinaux (25, 26) adjacents en une étape de travail sur leurs extrémités (32 à 35).

11. Procédé selon la revendication 10,
**caractérisée en ce qu'**après l'usinage de finition, l'on écarte les pièces (1, 2) à la transversale de leurs côtés longitudinaux (25, 26) adjacents assez loin pour que lesdits côtés longitudinaux (25, 26) puissent être usinés en longueur.

12. Procédé selon la revendication 10 ou 11,
**caractérisée en ce que** l'on usine simultanément les deux côtés longitudinaux (25, 26) des pièces (1, 2) avec au moins un outil (31) d'usinage en longueur.

13. Procédé selon la revendication 10 ou 11,
**caractérisée en ce que** l'on usine en longueur successivement les deux côtés longitudinaux (25, 26) des pièces (1, 2) à l'aide d'au moins un outil (31) d'usinage en longueur.

14. Procédé selon l'une quelconque des revendications 10 à 13, **caractérisée en ce qu'**après l'usinage de l'un (25, 26) de leurs côtés longitudinaux), l'on transfère les pièces (1, 2) sur une unité d'avance (V) supplémentaire, de telle sorte que l'autre côté longitudinal (21, 22) des pièces (1, 2) puisse être usiné.

15. Procédé selon la revendication 14,
**caractérisée en ce que** les pièces (1, 2) restent bridées lors du transfert.
